# EUROPÄISCHE PATENTSCHRIFT

(11) **EP 3 771 505 B1**
(45) Veröffentlichungstag und Bekanntmachung des Hinweises auf die Patenterteilung: **18.10.2023**
(21) Anmeldenummer: 20188447.5
(22) Anmeldetag: 29.07.2020
(51) Int. Cl.: B21J 15/02, B21K 25/00, B21J 15/28, B23P 19/06, B23K 20/12, B21J 15/18, F15B 11/048, F15B 13/02, B21J 5/06

(54) **VERFAHREN ZUR STEUERUNG EINES MECHANISCHEN FÜGEPROZESSES**
METHOD FOR CONTROLLING A MECHANICAL JOINING PROCESS
PROCÉDÉ DE COMMANDE D'UN PROCESSUS MÉCANIQUE D'ASSEMBLAGE

(30) Priorität: 01.08.2019 DE 102019120863
(43) Veröffentlichungstag der Anmeldung: 03.02.2021
(73) Patentinhaber: Atlas Copco IAS GmbH, 75015 Bretten-Gölshausen (DE)
(72) Erfinder: Guglhör, Manuel, 83671 Benediktbeuren (DE); Ludsteck, Michael, 81669 München (DE)
(74) Vertreter: Eder Schieschke & Partner mbB

(56) Entgegenhaltungen:
- EP-A1- 0 654 608
- EP-A1- 1 396 642
- EP-A1- 2 954 973
- EP-A2- 1 036 942
- AT-A1- 501 936
- DE-B3-102007 024 627

## Beschreibung

Die Erfindung betrifft ein Verfahren zur Steuerung eines mechanischen Fügeprozesses, insbesondere Fließlochschrauben in dünnwandigen Werkstoffen.

Derartige Verfahren finden in Bereichen, wie beispielsweise in der Fahrzeugtechnik, Anwendung, in denen thermische, stoffschlüssige Fügeverfahren (Lichtbogenschweißen, Widerstandsschweißen, Löten) problematisch sind. So verbieten sich thermische Verbindungstechniken im modernen Karosseriebau, wenn die zu fügenden Leichtbau-Materialien zu wärmeempfindlich sind. Dies gilt beispielsweise für viele Verbindungen mit warmumgeformten Stählen, Aluminiumlegierungen oder Faserverbundwerkstoffen, und insbesondere für heterogene Verbindungen dieser Materialien.

Mechanische und damit kalte Verfahren, wie insbesondere Fließlochschrauben, arbeiten im Unterschied zu thermischen Verbindungstechniken, wie insbesondere Schweißen, dabei nicht nur werkstoffschonend, sondern bieten zudem weitere Vorteile wie Schnelligkeit, einseitige Zugänglichkeit, Wartungsarmut und Energieeinsparung. Bei derartigen Verfahren ist es erforderlich, den Bearbeitungsprozess entsprechend den Anforderungen zu steuern bzw. gar zu regeln.

Beispielsweise müssen in einem Fügeprozess, wie Fließlochschrauben, Drehzahl und Vorschubgeschwindigkeit entsprechend den Anforderungen gesteuert werden, um ein Aufsetzen der Spitze der Schraube auf der Oberfläche eines Werkstücks, ein Eindringen der Schraube in das Werkstück und ein Durchdringen des Werkstücks zu berücksichtigen. Hierbei treten im Prozess durchaus unterschiedliche wechselnde Anforderungen an Vorschubkraft, -weg und Drehzahl auf.

Die Parameter werden hierbei üblicherweise überwacht, um einen Prozess innerhalb zulässiger Toleranzen zu gewährleisten. So soll beispielsweise bei einer Kopfauflage, also einer Berührung eines Schraubenkopfs mit der die Schraube aufnehmenden Aufnahme, vermieden werden, dass auf die Schraube über den Zeitpunkt der Kopfauflage hinaus ein unzulässig hohes Drehmoment aufgebracht wird (Überdrehen).

Um außerhalb vorgegebener Toleranzen, Toleranzbereiche oder Toleranzhüllkurven liegende Prozessparameter zu vermeiden, ist es im Stand der Technik beispielsweise erforderlich, die genaue Lage des Schraubenkopfs relativ zur Aufnahme zu ermitteln.

Allerdings führen zu berücksichtigende Bauteiltoleranzen dazu, dass eine Verminderung der Drehzahl im Bearbeitungsprozess meist früher erfolgt, als tatsächlich erforderlich. Entsprechend folgt hieraus eine unerwünschte Erhöhung der Zykluszeit.

Zur Detektion der Kopfauflage kommt in der Praxis auch eine Überwachung des Drehmoments in Frage. Allerdings ist eine derartige Drehmomentüberwachung nicht zur Steuerung der Drehzahlumschaltung bei herkömmlichen trägen Systemen geeignet, um ein Aufbringen eines unzulässig hohen Drehmoments zu vermeiden.

Die vorgenannten Verfahren gestatten daher keine schnell reagierende Steuerung und erfordern eine relativ lange Zykluszeit bei der Verarbeitung oder gestalten sich als sehr aufwändig.

In der AT 501 936 A1 wurde eine Vorrichtung zur Steuerung eines fluidisch betätigten Antriebs vorgeschlagen, die Schaltelemente zur Steuerung eines Hubzylinders umfasst.

In der DE 10 2007 024 627 A1 wurde weiter vorgeschlagen, für ein Verfahren zum Fügen oder Lösen eines Befestigungsmittels einen Differenzenquotient ΔL/Δt oder ΔL/Δϕ, also Änderung der Vorschubgeschwindigkeit des Befestigungsmittels oder dessen Vorschub in Abhängigkeit von seiner Drehbewegung, zur Steuerung heranzuziehen.

Ein derartiges Verfahren ist jedoch stark abhängig von der Geometrie des Befestigungsmittels, wobei insbesondere eine Schraubengeometrie ohne Kalibrierzone zwischen Spitze und Gewinde der Schraube eine Detektion der Änderung der Vorschubgeschwindigkeit oder des Vorschubs in Abhängigkeit von seiner Drehbewegung erschwert oder gar unmöglich macht.

Der Erfindung liegt daher die Aufgabe zugrunde, die Nachteile zu vermeiden und auf einfache Art und Weise einen hochgenauen Bearbeitungsprozess bei gleichzeitiger niedriger Zykluszeit zu ermöglichen. Weiterhin soll ein derartiger Bearbeitungsprozess unabhängig von der Geometrie eines Befestigungsmittels sein.

Diese Aufgabe wird erfindungsgemäß durch ein Verfahren mit den Merkmalen des Anspruchs 1 gelöst.

Durch die erfindungsgemäße Steuerung eines im Vergleich zu thermischen, stoffschlüssigen Fügeverfahren kalten mechanischen Verfahrens bzw. Prozesses wird ein hochgenauer Bearbeitungsprozess bei gleichzeitig niedriger Zykluszeit gewährleistet. Zudem ist die erfindungsgemäße Steuerung auch für eine beliebige Geometrie eines Befestigungsmittels anwendbar.

Hierzu wird eine Ist-Kurve eines Prozessparameters, wie beispielsweise Vorschubgeschwindigkeit, Vorschubkraft oder Anpressdruck an eine (ideale) Sollkurve des Prozessparameters angenähert, indem auf einen nicht motorischen Aktuator, insbesondere einen pneumatischen Zylinder (zur Erzeugung des Prozessparameters) mehrere Gegenimpulse einwirken. Auf diese Weise kann ein ansonsten träges Steuerverfahren mit Nachlaufzeit schneller an eine ideale Sollkurve angenähert werden.

Die Gegenimpulse erfolgen in Anzahl und Länge in Abhängigkeit wenigstens einer unmittelbar detektierbaren, mit dem Prozessparameter in Zusammenhang stehenden Größe, wie beispielsweise Kraft, Weg, Druck, Geschwindigkeit, Drehmoment, Zeit, Position, Drehzahl, Drehwinkel, Gegenimpulse oder einer Kombination hieraus.

Im Sinne der Erfindung wird als Impuls ein Signal des Einbringens einer Größe bezeichnet, wohingegen das Fehlen einer Größe als Pause zwischen zwei Impulsen definiert ist.

In bevorzugter Ausgestaltung der Erfindung werden die Gegenimpulse an einem pneumatischen Zylinder durch einen Druckaufbau auf der Gegenseite des Zylinders erzeugt. Hierdurch kann ein kostengünstiges und weit verbreitetes Steuerungsmittel (pneumatische Steuerung) verwendet werden, und dennoch eine hochgenaue Bearbeitung mit niedriger Zykluszeit gewährleistet werden.

Besonders vorteilhaft ist, dass das erfindungsgemäße Steuerungsverfahren auch auf bereits bestehende Bearbeitungssysteme angewandt werden kann, um eine höhere Bearbeitungsgeschwindigkeit und/oder Bearbeitungsqualität zu ermöglichen.

In besonders bevorzugter Ausgestaltung der Erfindung erfolgt die Ansteuerung eines Ventils zum Druckaufbau auf der Gegenseite des Zylinders impulsartig, indem für die Länge und Dauer eines Impulses Gas unter Druck von einer Quelle mit vorzugsweise konstantem Druck eingebracht wird.

Das Ventil kann hierbei als Mehrwegventil ausgebildet sein, so dass in den Pausen nicht nur der Weg für die Druckzufuhr geschlossen ist, sondern vorzugsweise der Druck auf der Gegenseite des Zylinders abgebaut werden kann (Entlüftung). Selbstverständlich ist es aber auch denkbar, statt eines Mehrwegventils ein zusätzliches Auslassventil vorzusehen, so dass während eines Impulses für eine gewünschte Dauer der Druck (impulsartig) vermindert werden kann. Hierdurch lässt sich eine noch schnellere und exaktere Steuerung der Ist-Kurve auf einfache Weise ermöglichen.

In bevorzugter Ausgestaltung der Erfindung weist ein pneumatischer Zylinder an der Zylindergegenseite einen gasdichten Raum mit einem (zweiten) Ventil auf, das im Unterschied zu einem Proportionalventil nur die diskreten Schaltstellungen "Offen" und "Geschlossen" und hierdurch die Erzeugung von Gegenimpulsen ermöglicht.

Zur Erzeugung der Gegenimpulse umfasst eine Vorrichtung zur Durchführung des Verfahrens vorzugsweise eine Auswerte- und Steuereinrichtung, die derart ausgebildet ist, dass sie das zweite Ventil in Abhängigkeit wenigstens einer unmittelbar detektierbaren, mit dem Prozessparameter in Zusammenhang stehenden Größe impulsartig ansteuert, um den Verlauf der Ist-Kurve des Prozessparameters an den Verlauf der vorgegebenen Soll-Kurve des Prozessparameters mittels mehrerer Gegenimpulse anzupassen bzw. anzunähern.

Die wenigstens eine unmittelbar detektierbare, mit dem Prozessparameter in Zusammenhang stehende Größe kann dabei aus den Größen Kraft, Weg, Druck, Geschwindigkeit, Drehmoment, Zeit, Position, Drehzahl, Drehzahl, Drehwinkel, Gegenimpulse oder einer Kombination hieraus gewählt werden, so dass eine schnelle Anpassung der Ist-Kurve ermöglicht, insbesondere ein unerwünschtes Nacheilen bzw. Nachlaufen der Steuerung vermieden wird.

Mit einer derartigen Vorrichtung wird selbst eine Regelung einer Ist-Kurve eines Prozessparameters um eine vorgegebene Soll-Kurve innerhalb enger Toleranzen ermöglicht.

Weitere vorteilhafte Ausgestaltungen der Erfindung ergeben sich aus den abhängigen Ansprüchen.

Die Erfindung wird nachfolgend anhand eines in der Zeichnung dargestellten Ausführungsbeispiels näher erläutert.

In der Zeichnung zeigen:
- Fig. 1: ein schematisches (Schalt-)Bild eines Aufbaus zur Durchführung des erfindungsgemäßen Verfahrens und
- Fig. 2: ein Kraft-Zeit-Diagramm des Ablaufs des erfindungsgemäßen Verfahrens.

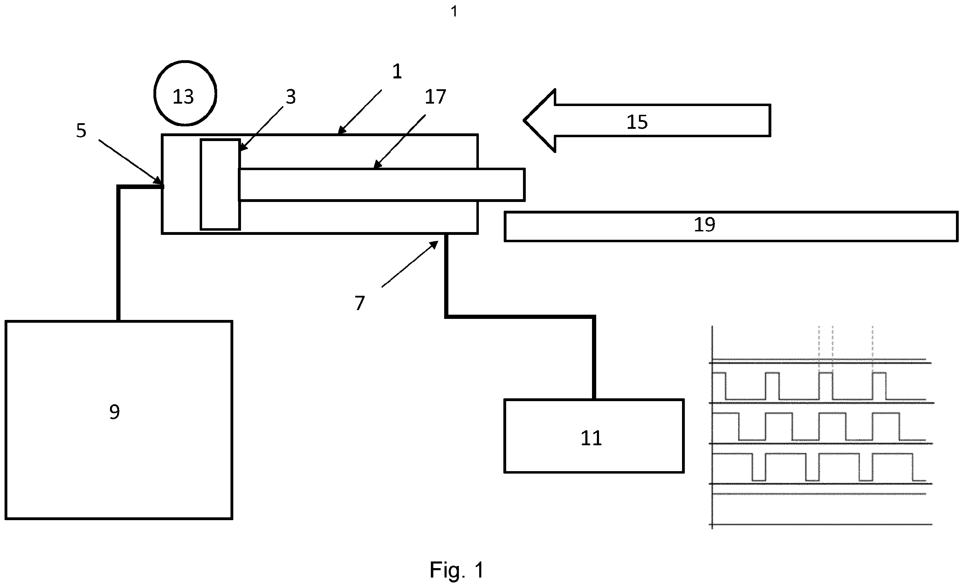

Der in Fig. 1 dargestellte Aufbau zeigt beispielhaft eine Vorrichtung zur Steuerung eines erfindungsgemäßen Verfahrens zur Steuerung eines mechanischen Fügeprozesses, insbesondere Fließlochschrauben.

Die Vorrichtung weist hierzu einen pneumatischen Zylinder 1 auf, dessen Kolben 3 über einen Anschluss 5 an seiner Vorderseite mit Druck (Gas oder Luft) beaufschlagt wird.

An der Gegenseite des Zylinders 1 bzw. des Kolbens 3 existiert ein weiterer Anschluss 7, um einen Gegenimpuls(-druck) an der Gegenseite des Zylinders 1 bzw. des Kolbens 3 zu erzeugen.

Der Anschluss 5 steht in nicht näher dargestellter Weise mit einer Druckquelle in Verbindung, wobei der Druck über ein Regelventil entsprechend den gewünschten Anforderungen geregelt wird.

Der Anschluss 7 steht wiederum in nicht näher dargestellter Weise mit einer Druckquelle (derselben oder einer weiteren) in Verbindung, wobei der Druck zur Erzeugung der Gegenkraft in Form von Impulsen über ein pneumatisches Ventil mit den Zuständen "Offen" und "Geschlossen" gesteuert wird.

Das pneumatische Ventil 11 kann vorteilhafterweise als 3-Wege-Ventil ausgebildet sein, so dass hierüber nicht nur der Druckaufbau auf der Gegenseite des Zylinders 1 bzw. des Kolbens 3 erfolgt, sondern auch das Entlüften erfolgen kann.

Am Zylinder 1 kann in nicht näher dargestellter Weise der Druck 13 und damit die Kraft 15 gemessen werden, mit welcher der Kolben 3 und damit das - in der Zeichnung nicht näher dargestellte - Bauteil, insbesondere Fließschraube, beaufschlagt wird.

An dem Zylinder 1 bzw. Kolben 3 oder Kolbenstange 17 kann zudem mit an sich bekannten Mitteln eine Wegmessung 19 vorgenommen werden, um das erfindungsgemäße Verfahren zusätzlich zu überwachen und/oder zu steuern.

Rechts neben dem pneumatischen Ventil 11 sind beispielhaft für das Öffnen und Schließen dieses Ventils 11 verschiedene Arten von Impulsfolgen dargestellt, mit welchen das Ventil 11 gesteuert wird.

Diese Impulsfolgen zeigen gleichförmige Impulslängen für das Öffnen (Druckaufbau) und gleichförmige Pausen zwischen den Impulsen für das Schließen bzw. Umschalten zum Entlüften des Ventils 11.

Statt gleichförmiger Impulse und Pausen ist es selbstverständlich auch denkbar, die Impulse und Pausen in ihrer Länge bei Bedarf zu variieren.

Im Folgenden wird ein typischer Verfahrensablauf anhand des Prozesses des Einbringens einer Fließlochschraube in ein Werkstück erläutert.

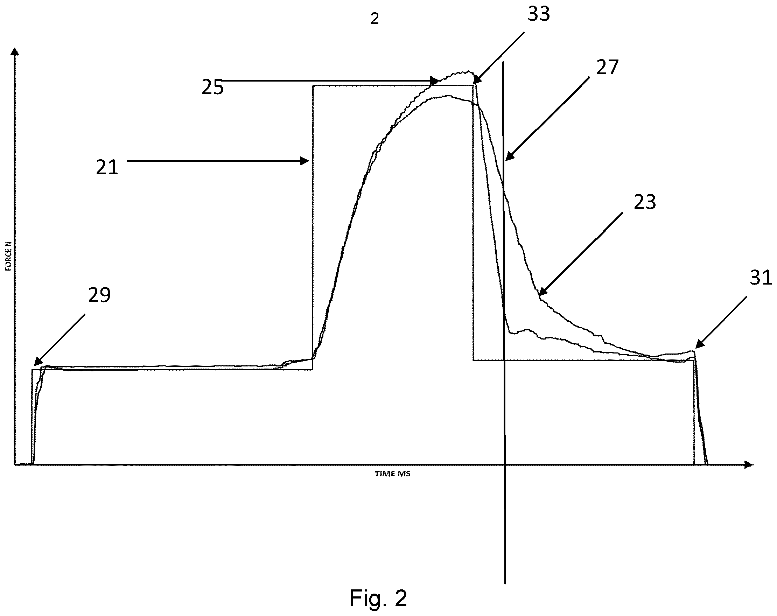

Das in Fig. 2 dargestellte Diagramm zeigt eine ideale Sollkurve 21 für den Prozess einer Fließlochschraube mit einer Gesamtdauer von beispielsweise 3000 ms.

Weiterhin ist in Fig. 2 ein typischer Ablauf 23 des Prozesses ohne erfindungsgemäßen Gegenimpuls dargestellt, sowie der Ablauf 25 des Prozesses mit den erfindungsgemäßen Gegenimpulsen.

Bei Prozessbeginn 29 (erster senkrechter oder nahezu senkrechter Anstieg der Kurven 21, 23 und 25) liegt die Schraube mit ihrer Spitze auf der Oberfläche des Werkstücks bzw. des Werkstoffs an und wird daher (rotierend) mit einer konstanten Kraft (in Längsrichtung der Schraube) von beispielsweise 500 Newton (N) beaufschlagt.

Hierzu wird das Ventil 9 entsprechend geregelt, um einen diese Kraft bewirkenden Druck (beispielsweise 1 bar) an der Vorderseite des Zylinders 1 zu erzeugen.

Dringt die Spitze der Schraube in den Werkstoff ein, so muss eine erhöhte Reibungskraft überwunden werden. Hierzu wird das Ventil 9 entsprechend geregelt, bis die gewünschte Kraft von beispielsweise 1000 N (oder auch 2000 N) erreicht wird.

Wird der dünnwandige Werkstoff von der Schraube durchdrungen und infolge dessen das Gewinde geformt, so muss die Kraft auf ein gewünschtes Maß von beispielsweise 500 N abnehmen (fallende Flanke 33) und bis zum Erreichen eines vordefinierten (parametrierbaren) Drehmoments, insbesondere Anzugsmoment, und/oder bis zum Erreichen der Kopfauflage bestehen. Mit dem Erreichen der Kopfauflage und/oder des vordefinierten Drehmoments wird der Prozess beendet 31 (letzte senkrechte oder nahezu senkrechte fallende Flanke der Kurven 21, 23 und 25).

Wie aus Fig. 2 ersichtlich, ist der Ablauf 23 ohne Gegenimpuls weit von dem idealen Ablauf der Kurve 21 entfernt. So muss bei einem Prozessablauf ohne Gegenimpuls bereits einige Zeit vor einem Durchdringen 33 der Druckaufbau abgebrochen werden, um ein Gewindeformen ab dem Durchdringen 33 überhaupt zu ermöglichen, da ansonsten ab dem Durchdringen 33 die Fließschraube mit zu hoher (Vorschub-)Kraft beaufschlagt wird.

Dagegen kann die Kurve 23 des realen Prozesses mit erfindungsgemäßen Gegenimpulsen nahe an die ideale Kurve 21 angenähert werden.

So kann das Ventil 9 statt einige Zeit, beispielsweise 100 ms, vor dem Durchdringen 33 erst ab dem tatsächlichen Durchdringen 33 abgeregelt werden, da durch einen Gegenimpuls von beispielsweise 80 ms Dauer auf der Gegenseite des Zylinders 1 bzw. Gegenseite des Kolbens 3 ein stärkerer Abfall der Kraft erzeugt wird.

Vor Erreichen der gewünschten reduzierten Kraft für das Gewindeformen wird dieser Impuls (senkreche Linie 27) beendet und für eine kurze Dauer von wenigen Millisekunden (ms) die Zylindergegenseite entlüftet, bevor ein erneuter kürzerer Gegenimpuls erzeugt wird.

Durch mehrere solche kurze Gegenimpulse kann die reale Kurve 25 gut an die ideale Kurve angenähert werden, ohne dass in diesem Bereich für das Gewindeformen eine erforderliche Mindestkraft von beispielsweise 500 N unterschritten wird.

Selbstverständlich ist es auch denkbar, anstatt des Ausbildens des Ventils 11 als 3-Wege-Ventil ein zusätzliches Ventil zum Entlüften vorzusehen, so dass ein Entlüften nicht nur in den Pausen zwischen zwei Impulsen erfolgen kann.

Anhand des vorgenannten Beispiels wird deutlich, dass impulsartige Gegenimpulse bei einem pneumatischen System den unerwünschten Nachlauf so weit unterdrücken, dass eine deutlich schnellere Steuerung und sogar eine hohe Annäherung an eine ideale Sollkurve 21 bzw. Regelung um eine solche Kurve ermöglicht werden.

Wie aus dem vorstehend erläuterten Beispiel verständlich wird, können die Gegenimpulse (also Öffnen des Ventils 11 und Druckaufbau zur Erzeugung einer Gegenkraft auf der Gegenseite des Zylinders 1) in Anzahl und Länge an weitere physikalische Größen eines Prozesses (Weg, Geschwindigkeit, Zeit, Position, Beschleunigung, Druck, Kraft, Drehmoment, etc.) gekoppelt werden, um je nach Anforderung die optimalen Ergebnisse zu erzielen.

Ebenso kann die Länge der Pausen zwischen den Impulsen individuell an die Anforderungen angepasst werden, insbesondere, um ein schnelles Entlüften zwischen den Impulsen zu ermöglichen.

Bei Verwendung eines zusätzlichen Ventils zum Entlüften kann mit der Entlüftung auch schon vor Ende eines Impulses begonnen werden, so dass aus eher rechteckförmigen Impulsen sägezahnförmige Impulse oder gar peakähnliche Impulse (kurze Spitzen) entstehen.

Die Länge und Anzahl der Gegenimpulse und der Pausen können gegebenenfalls auch vorausschauend berechnet werden, beispielsweise aus dem Gefälle der Kraftreduzierung kombiniert mit der im Programm parametrierten Kraftdifferenz (Bilden einer Kennlinie für die Gegenimpulslänge und/oder Anzahl sowie Pausenlänge).

### Bezugszeichenliste

- 1: pneumatischer Zylinder
- 3: Kolben
- 5: Anschluss (Vorderseite)
- 7: weiterer Anschluss
- 9: Regelventil
- 11: pneumatisches Ventil
- 13: Druckmessung
- 15: Kraftmessung
- 17: Kolbenstange
- 19: Wegmessung
- 21: Sollkurve
- 23: Ablauf ohne Gegenimpuls
- 25: Ablauf mit Gegenimpuls
- 27: senkrechte Linie
- 29: Prozessbeginn
- 31: Prozessende
- 33: fallende Flanke (Durchdringen des Werkstoffs)

## Patentansprüche

1. Verfahren zur Steuerung eines mechanischen Fügeprozesses, insbesondere Fließlochschrauben in dünnwandigen Werkstoffen, mit einem nicht motorischen Aktuator, nämlich einem pneumatischen Zylinder zur Erzeugung eines Prozessparameters,
wobei der Verlauf einer Ist-Kurve (23) des Prozessparameters an den Verlauf einer vorgegebenen Soll-Kurve (21) des Prozessparameters mittels mehrerer auf den Prozessparameter einwirkender Gegenimpulse (25) angenähert wird und Anzahl und Länge der Gegenimpulse und Länge der Pausen zwischen den Impulsen in Abhängigkeit wenigstens einer unmittelbar detektierbaren, mit dem Prozessparameter in Zusammenhang stehenden Größe bestimmt werden.

2. Verfahren nach Anspruch 1, **dadurch gekennzeichnet, dass** die wenigstens eine unmittelbar detektierbare, mit dem Prozessparameter in Zusammenhang stehende Größe aus den Größen Kraft, Weg, Druck, Geschwindigkeit, Drehmoment, Zeit, Position, Drehzahl, Drehwinkel oder einer Kombination hieraus gewählt wird.

3. Verfahren nach Anspruch 1 oder 2, **dadurch gekennzeichnet, dass** die Gegenimpulse an einem pneumatischen Zylinder (1) durch einen Druckaufbau auf der Gegenseite des Zylinders (1) erzeugt werden.

4. Verfahren nach Anspruch 3, **dadurch gekennzeichnet, dass** die Ansteuerung eines Ventils (11) zum Druckaufbau auf der Gegenseite des Zylinders (1) impulsartig erfolgt, indem für die Länge und Dauer eines Impulses Gas unter Druck eingebracht wird.

5. Verfahren nach Anspruch 3 oder 4, **dadurch gekennzeichnet, dass** der durch die Gegenimpulse aufgebaute Druck auf der Gegenseite des Zylinders (1) mittels eines Auslassventils (11) abgebaut werden kann, indem die Ansteuerung des Auslassventils impulsartig erfolgt.

6. Verfahren nach Anspruch 4 oder 5, **dadurch gekennzeichnet, dass** der Druck auf der Gegenseite des Zylinders (1) in den Pausen zwischen den Impulsen abgebaut wird, insbesondere entlüftet wird.

## Claims

1. Method for controlling a mechanical joining process, in particular flow drill fastening in thin-walled materials, using a non-motorized actuator, specifically a pneumatic cylinder for generating a process parameter,
wherein the profile of an actual curve (23) of the process parameter is approximated to the profile of a predetermined target curve (21) of the process parameter by means of a plurality of counter pulses (25) acting on the process parameter, and the number and length of the counter pulses and length of the pauses between the pulses are determined on the basis of at least one immediately detectable variable related to the process parameter.

2. Method according to claim 1, **characterized in that** the at least one immediately detectable variable related to the process parameter is selected from the variables force, path, pressure, speed, torque, time, position, rotational speed, rotational angle or a combination thereof.

3. Method according to claim 1 or 2, **characterized in that** the counter pulses are generated on a pneumatic cylinder (1) by a build-up of pressure on the opposite side of the cylinder (1).

4. Method according to claim 3, **characterized in that** the actuation of a valve (11) for the build-up of pressure on the opposite side of the cylinder (1) takes place in a pulsed manner by introducing pressurized gas for the length and duration of a pulse.

5. Method according to claim 3 or 4, **characterized in that** the pressure built up by the counter pulses can be reduced on the opposite side of the cylinder (1) by means of an outlet valve (11), by the actuation of the outlet valve taking place in a pulsed manner.

6. Method according to claim 4 or 5, **characterized in that** the pressure on the opposite side of the cylinder (1) is reduced, in particular vented, in the pauses between the pulses.

## Revendications

1. Procédé permettant de commander un processus d'assemblage mécanique, en particulier un fluoperçage dans des matériaux à parois minces, comportant un actionneur non motorisé, à savoir un cylindre pneumatique pour la génération d'un paramètre de processus,
dans lequel le tracé d'une courbe réelle (23) du paramètre de processus est rapproché du tracé d'une courbe de consigne prédéfinie (21) du paramètre de processus au moyen de plusieurs contre-impulsions (25) agissant sur le paramètre de processus et le nombre et la longueur des contre-impulsions et la longueur des pauses entre les impulsions sont déterminés en fonction d'au moins une grandeur directement détectable et liée au paramètre de processus.

2. Procédé selon la revendication 1, **caractérisé en ce que** l'au moins une grandeur directement détectable et liée au paramètre de processus est choisie parmi les grandeurs force, déplacement, pression, vitesse, couple, temps, position, vitesse de rotation, angle de rotation ou une combinaison de celles-ci.

3. Procédé selon la revendication 1 ou 2, **caractérisé en ce que** les contre-impulsions sur un cylindre (1) pneumatique sont générées par une accumulation de pression sur le côté opposé du cylindre (1).

4. Procédé selon la revendication 3, **caractérisé en ce que** la commande d'une soupape (11) pour l'accumulation de pression sur le côté opposé du cylindre (1) est effectuée par impulsions en introduisant du gaz sous pression pendant la longueur et la durée d'une impulsion.

5. Procédé selon la revendication 3 ou 4, **caractérisé en ce que** la pression accumulée par les contre-impulsions sur le côté opposé du cylindre (1) peut être réduite au moyen d'une soupape de décharge (11) en effectuant la commande de la soupape de décharge par impulsions.

6. Procédé selon la revendication 4 ou 5, **caractérisé en ce que** la pression sur le côté opposé du cylindre (1) est réduite pendant les pauses entre les impulsions, en particulier est purgée.
